# EUROPEAN PATENT SPECIFICATION

(11) **EP 4 542 722 B1**
(45) Date of publication and mention of the grant of the patent: **02.09.2026**
(21) Application number: 24827703.0
(22) Date of filing: 19.07.2024
(51) Int. Cl.: H01M 10/42

(54) **WATER IMMERSION PROTECTION METHOD BASED ON STATE MONITORING AND RELATED DEVICE**
WASSERIMMERSIONSSCHUTZVERFAHREN AUF BASIS VON ZUSTANDSÜBERWACHUNG UND ZUGEHÖRIGE VORRICHTUNG
PROCÉDÉ DE PROTECTION CONTRE L'IMMERSION DANS L'EAU BASÉ SUR LA SURVEILLANCE D'ÉTAT ET DISPOSITIF ASSOCIÉ

(30) Priority: 26.07.2023 CN 202310920183
(43) Date of publication of application: 23.04.2025
(73) Proprietor: Shenzhen Ampere Time Digital Energy Technology Co., Ltd., Shenzhen, Guangdong 518100 (CN)
(72) Inventor: LU, Haijun, Shenzhen Guangdong 518100 (CN); ZHAO, Menglong, Shenzhen Guangdong 518100 (CN)
(74) Representative: Santarelli
(86) International application number: PCT/CN2024/106387
(87) International publication number: WO 2025/021023

(56) References cited:
- CN-A- 103 561 171
- CN-A- 105 262 908
- CN-A- 107 147 771
- CN-A- 108 769 424
- CN-A- 108 769 424
- CN-A- 112 272 251
- CN-A- 116 646 628
- CN-A- 117 996 229
- JP-A- 2013 251 261

## Description

### TECHNICAL FIELD

This disclosure relates to the field of emergency protection-circuit-device technology in the new energy industry, and in particular to a state-monitoring-based fall-into-water protection method and a related device.

### BACKGROUND

At present, leisure activities such as seaside fishing and the like are popular among the public. Near-water activities such as sea fishing, fishing on a boat, and the like, are common application scenarios for portable mobile power supplies. Due to the influence of small boat rocking along with the water surface, there is a risk of the portable mobile power source falling into water.

In general, an output port of the portable mobile power source is exposed, and the existing portable mobile power source does not have a water-contact power-off function, so that after the existing portable mobile power source gets soaked, not only can the power source be damaged, but even a safety incident may be caused by electrical conductivity of water. Even though there is a portable mobile power source with the water-contact power-off function in the related art, and the portable mobile power source can protect the power source from damage and improve safety, when the portable mobile power source falls into deep water, it is extremely difficult to salvage the power source, which still causes property losses to users. Documents CN108769424A, CN103561171A and CN105262908A disclose a state-monitoring-based fall-into-water protection apparatuses according to the prior art.

### SUMMARY

The invention is defined by the independent claims. The present disclosure provides a state-monitoring-based fall-into-water protection method and a related device, so that when a fall-into-water incident occurs, an intelligent storage battery box with a built-in mobile power source can automatically float on the water in time. Therefore, the built-in mobile power source is prevented from being damaged due to water intake, the comprehensiveness and intelligence of protecting the mobile power source by the intelligent storage battery box are improved, and the user experience is optimized.

In a first aspect, a state-monitoring-based fall-into-water protection method is provided according to claim 1, and is applied to an intelligent storage battery box. A battery compartment of the intelligent storage battery box accommodates a mobile power source. The intelligent storage battery box includes a box body, a box cover, and a binding band for fixing the box body and the box cover. The box cover includes a control module, a handle module, a first function module and a second function module respectively disposed at two sides of a handle of the handle module, a first fixing buckle, and a second fixing buckle. At least one humidity sensor is disposed around the box body. An acceleration sensor is further disposed at the box cover. The acceleration sensor is configured to obtain an acceleration in a vertically downward direction. The handle module includes the handle and a base cover-plate for supporting the handle. The base cover-plate is integrated with the first function module and the second function module. The first function module includes a positive power-source port. The second function module includes a negative power-source port. An electrical loop led out from the positive power-source port and the negative power-source port is configured to supply power to the control module. The first function module or the second function module is further provided with a fall-into-water floatable apparatus. The fall-into-water floatable apparatus includes a floatable airbag in a folded state. The control module is configured to implement fall-into-water protection for the mobile power source in the battery compartment of the intelligent storage battery box through the following. An acceleration of the intelligent storage battery box and a humidity of an environment in which the intelligent storage battery box is located are detected. A space occupation state of the intelligent storage battery box is determined according to the acceleration and the humidity. The space occupation state includes a non-fall-into-water state and a fall-into-water state. In response to the space occupation state of the intelligent storage battery box being the fall-into-water state, a fall-into-water protection start instruction is generated, and the fall-into-water floatable apparatus is controlled to inflate the floatable airbag in the folded state according to the fall-into-water protection start instruction. A buoyancy force of the floatable airbag after inflation is completed is greater than a mass of the intelligent storage battery box and the mobile power source.

In a second aspect, a state-monitoring-based fall-into-water protection apparatus is provided according to claim 5, and is applied to an intelligent storage battery box. A battery compartment of the intelligent storage battery box accommodates a mobile power source. The intelligent storage battery box includes a box body, a box cover, and a binding band for fixing the box body and the box cover. The box cover includes a control module, a handle module, a first function module and a second function module respectively disposed at two sides of a handle of the handle module, a first fixing buckle, and a second fixing buckle. At least one humidity sensor is disposed around the box body. An acceleration sensor is further disposed at the box cover. The acceleration sensor is configured to obtain an acceleration in a vertically downward direction. The handle module includes the handle and a base cover-plate for supporting the handle. The base cover-plate is integrated with the first function module and the second function module. The first function module includes a positive power-source port. The second function module includes a negative power-source port. An electrical loop led out from the positive power-source port and the negative power-source port supplies power to the control module. The first function module or the second function module is further provided with a fall-into-water floatable apparatus. The fall-into-water floatable apparatus includes a floatable airbag in a folded state. The state-monitoring-based fall-into-water protection apparatus includes a detecting unit, a determining unit, and a fall-into-water protection unit. The detecting unit is configured to detect an acceleration of the intelligent storage battery box and a humidity of an environment in which the intelligent storage battery box is located. The determining unit is configured to determine a space occupation state of the intelligent storage battery box according to the acceleration and the humidity. The space occupation state includes a non-fall-into-water state and a fall-into-water state. The fall-into-water protection unit is configured to generate a fall-into-water protection start instruction in response to the space occupation state of the intelligent storage battery box being the fall-into-water state, and control the fall-into-water floatable apparatus to inflate the floatable airbag in the folded state according to the fall-into-water protection start instruction. A buoyancy force of the floatable airbag after inflation is completed is greater than a mass of the intelligent storage battery box and the mobile power source.

In a third aspect, an intelligent storage battery box is provided according to claim 6. The intelligent storage battery box includes a processor, a memory, and one or more programs. The one or more programs are stored in the memory and configured to be executed by the processor. The one or more programs include instructions for executing the operations in the first aspect of the embodiment of the present disclosure.

In a fourth aspect, a computer-readable storage medium is provided according to claim 7.

It can be seen that, in the embodiment of the present disclosure, the acceleration of the intelligent storage battery box and the humidity of the environment in which the intelligent storage battery box is located are detected by the control module, and then the space occupation state of the intelligent storage battery box is determined according to the acceleration and the humidity. The space occupation state includes the non-fall-into-water state and the fall-into-water state. If the space occupancy state of the intelligent storage battery box is the fall-into-water state, the fall-into-water protection start instruction is generated, and the fall-into-water floatable apparatus is controlled to inflate the floatable airbag in the folded state according to the fall-into-water protection start instruction, so that the intelligent storage battery box floats on the water. Therefore, the intelligent storage battery box can determine when to take the fall-into-water protection measure according to the space occupation state, and the floatable airbag can be ejected in short time to protect the mobile power source built in the intelligent storage battery box from being soaked. Meanwhile, the user can find the intelligent storage battery box floating on the water in time, thereby improving the comprehensiveness and intelligence of protecting the built-in mobile power source by the intelligent storage battery box.

### BRIEF DESCRIPTION OF THE DRAWINGS

To describe the technical solutions in embodiments of the present disclosure or the related art more clearly, the accompanying drawings required for use in the embodiments or the related art are briefly described below. Apparently, the accompanying drawings in the following description show merely some embodiments of the present disclosure, and those of ordinary skill in the art may obtain other accompanying drawings from these accompanying drawings without creative effort.
FIG. 1 is a structural block diagram of an intelligent storage battery box provided in an embodiment of the present disclosure.
FIG. 2 is a schematic flowchart of a state-monitoring-based fall-into-water protection method provided in an embodiment of the present disclosure.
FIG. 3 is a schematic diagram of application of an ejector provided in an embodiment of the present disclosure.
FIG. 4 is a sketch of a prompt interface displayed on a terminal device provided in an embodiment of the present disclosure.
FIG. 5 is a schematic structural diagram of a fall-into-water floatable apparatus provided in an embodiment of the present disclosure.
FIG. 6A is a block diagram of function units of a state-monitoring-based fall-into-water protection apparatus according to claim 5.
FIG. 6B is a block diagram of function units of a state-monitoring-based fall-into-water protection apparatus, which does not form part of the claimed invention.
FIG. 7 is a block diagram of function units of an intelligent storage battery box provided in an embodiment of the present disclosure.

### DETAILED DESCRIPTION

In order to enable those skilled in the art to better understand solutions of the present disclosure, the following will clearly and completely describe technical solutions of embodiments of the present disclosure with reference to the accompanying drawings. Apparently, embodiments described herein are merely some embodiments, rather than all embodiments.

The terms such as "first", "second", etc., in the specification, the claims, and the above accompanying drawings of the present disclosure are used to distinguish different objects, rather than describing a particular order. In addition, the terms "including", "comprising", and "having" as well as variations thereof are intended to cover non-exclusive inclusion. For example, a process, method, system, product, or device including a series of steps is not limited to the listed steps, on the contrary, it can optionally include other steps that are not listed; alternatively, other steps inherent to the process, method, product, or device can be included either.

The term "embodiment" referred to herein means that particular features, structures, or properties described in conjunction with embodiments may be defined in at least one embodiment of the present disclosure. The phrase "embodiment" appearing in various places in the specification does not necessarily refer to the same embodiment or an independent/alternative embodiment that is mutually exclusive with other embodiments. Those skilled in the art will understand explicitly and implicitly that an embodiment described in the present disclosure may be combined with other embodiments.

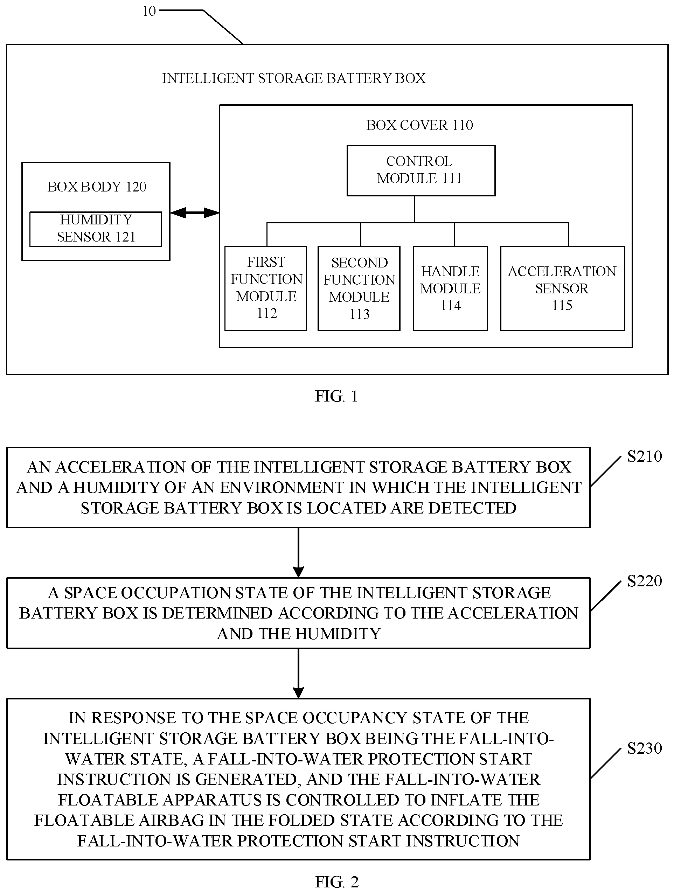

Reference can be made to FIG. 1, which is a structural block diagram of an intelligent storage battery box provided in an embodiment of the present disclosure. As illustrated in FIG. 1, the intelligent storage battery box 10 includes a box cover 110 and a box body 120, and is fixed by a binding band independent of the box cover 110 and the box body 120. Meanwhile, fixing buckle structures are also disposed at two sides or four sides of the box cover 110, and are configured to reinforce the connection between the box cover 110 and the box body 120. In order to adapt to the shape of the mobile power source, the box body 120 generally presents a three-dimensional shape of a rectangular solid or a cube. It may be understood that, the box cover 110 is also adapted to the shape of the box body 120.

The box body 120 is configured to accommodate a built-in mobile power source. The box body 120 may be made of a composite material or other materials which are relatively strong and resistant to collision, water, and moisture, so that the box body 120 can physically protect the internal mobile power source. At least one humidity sensor 121 is further disposed on the outer side of the box body 120. The at least one humidity sensor 121 may be arranged on the same horizontal line on the outer side of the box body 120, or may be arranged on different horizontal lines on the outer side of the box body 120.

The box cover 110 includes a control module 111, a second function module 112 and a first function module 113 respectively disposed at two sides of a handle, and a handle module 114. The handle module 114 includes the handle and a base cover-plate for supporting the handle. The base cover-plate is integrated with the second function module 112 and the first function module 113. The first function module 113 includes a positive power-source port. The second function module 112 includes a negative power-source port. A connecting wire wrapped with a material such as silica gel is led out from the positive power-source port, and a connecting wire wrapped with a material such as silica gel is led out from the negative power-source port. The connecting wire led out from the positive power-source port is provided with a stud or a post, which is configured to access a positive electrode of the internal mobile power source and is made of a metal material with high conductivity, at the outer side of the connecting wire. The connecting wire led out from the positive power-source port is connected to the positive electrode of the mobile power source at the inner side of the connecting wire. The connecting wire led out from the negative power-source port is provided with a stud or a post, which is configured to access a negative electrode of the internal mobile power source and is made of a metal material with high conductivity, at the outer side of the connecting wire. The connecting wire led out from the negative power-source port is connected to the negative electrode of the mobile power source at the inner side of the connecting wire.

An electrical loop led out from the positive power-source port and the negative power-source port is configured to supply power to the control module 111.

A fall-into-water floatable apparatus is further disposed at the first function module 113 and/or the second function module 112. The fall-into-water floatable apparatus includes a floatable airbag in a folded state and a gas generator. The floatable airbag may be square or spherical in shape, to increase a buoyancy force of the intelligent storage battery box in water, so that the intelligent storage battery box does not continue to sink or floats upwards to the water surface, and a movement direction of the floatable airbag is a direction in which the floatable airbag is ejected relative to the lower part of the box cover 110. When the floatable airbag is in operate, the lowest point of the floatable airbag is not higher than the highest point of the box cover 110, so as to ensure that most of the intelligent storage battery boxes can be located above the water surface with the aid of the floatable airbag, thereby reducing the risk of water inflow inside the box body 120. An acceleration sensor 115 is further disposed on the box cover 110. The acceleration sensor 115 is configured to detect an acceleration of the present intelligent storage battery box in a vertically downward direction. A position at which the acceleration sensor 115 is disposed is not limited.

The following introduces a state-monitoring-based fall-into-water protection method provided in an embodiment of the present disclosure.

Reference can be made to FIG. 2, which is a schematic flowchart of a state-monitoring-based fall-into-water protection method provided in an embodiment of the present disclosure. The method is applied to the control module 111 in the intelligent storage battery box 10 as illustrated in FIG. 1. The control module 111 is configured to implement fall-into-water protection for the mobile power source in the battery compartment of the intelligent storage battery box by following operations.

At S210, an acceleration of the intelligent storage battery box and a humidity of an environment in which the intelligent storage battery box is located are detected.

The acceleration detected of the intelligent storage battery box includes accelerations of the intelligent storage battery box in various directions in the space, such as, a horizontally upward direction, a horizontal direction, a horizontally downward direction, and the like. The humidity is a numerical value used by the humidity sensor to describe a proportion of water vapor in detected air. When the humidity is higher, the proportion of the water vapor in the air is higher. When the humidity reaches a certain value, it indicates that the currently detected environment is water.

In a possible example, a circuit breaker is disposed at the first function module or the second function module. The circuit breaker is configured to control power supply of the mobile power source. When the intelligent storage battery box is determined to be in a falling state, the method further includes the following. A switch of the circuit breaker is cut off.

Specifically, when the intelligent storage battery box is determined to be in the falling state, the circuit breaker is controlled by the control module to be cut off, so that internal power supply of the mobile power source is cut off. Therefore, it is ensured that after the intelligent storage battery box falls into water subsequently, an internal circuit will not be short-circuited, and even the mobile power source will not be burnt out.

It can be seen that in this example, when the intelligent storage battery box is determined to be in the falling state, the switch of the circuit breaker is automatically cut off, the internal power-supply circuit of the mobile power source is disconnected, and a protection measure is taken in time before the intelligent storage battery box falls into water, so as to reduce the short-circuited risk caused by water to the mobile power source after the intelligent storage battery box falls into the water subsequently. Therefore, the timeliness of protecting the built-in mobile power source by the intelligent storage battery box can be improved, and the comprehensiveness and intelligence of protecting the built-in mobile power source by the intelligent storage battery box can be improved.

In a possible example, the box cover further includes at least one charging port. The at least one charging port is configured to supply power to a device connected to the at least one charging port through the mobile power source. An ejector is disposed at the at least one charging port. The ejector includes a spring and an ejector rod connected to the spring. After the switch of the circuit breaker is cut off, the method further includes the following.

Whether at least one charging port is connected to a charging port on a charging wire of another power device is detected. In response to detecting that the at least one charging port is connected to the charging port on the charging wire of the another power device, a position of a charging port of the at least one charging port connected to the charging port on the charging wire of the another power device is determined. An ejector corresponding to the position of the charging port of the at least one charging port connected to the charging port on the charging wire of the another power device is started, to eject the spring in a compressed state, to outwardly push the charging port on the charging wire of the another power device in a connected state through the ejector rod.

The ejector is mounted in the at least one charging port of the box cover, an ejection direction of the spring is opposite to an insertion direction of the charging wire of the another power device, the spring is provided with an ejector rod at a front end of the spring. The ejector rod may have a cylindrical structure made of a metal material or a rubber material. The ejector rod is in contact with an inserted end of the charging wire of the another power device.

Specifically, when in a normal charging mode, that is, when the ejector is not started, the spring is in the compressed state, the ejector rod is only in contact with the inserted end of the charging wire of the another power device, and no outward pushing force is exerted on the end of the charging wire of the another power device. When the ejector is started, the spring is triggered to quickly release an elastic force to push the ejector rod at the front end of the spring, so that the ejector rod exerts the outward pushing force on the inserted end of the charging wire of the another power device, to eject the charging port. Therefore, it is ensured that, under the condition of weightlessness and falling of the intelligent storage battery box, the charging wire of the another power device connected to the at least one charging port of the box cover is ejected in time, so as to prevent the another power device in charging, such as a mobile phone, a tablet computer, a notebook computer, and the like, from being dragged into the water by the intelligent storage battery box due to the connection to the port of the charging wire.

Specifically, the charging port includes, but is not limited to, a universal serial bus (USB) port, a quick charge (QC) 3.0 port, a jack socket of an ignition device with 15A, and other types. The charging port can be configured to be connected to a charging wire of an external electricity-consumption device, at the outer side of the charging port. The charging port is connected to the mobile power source, at the inner side of the charging port. Therefore, power is supplied to the external electricity-consumption device connected.

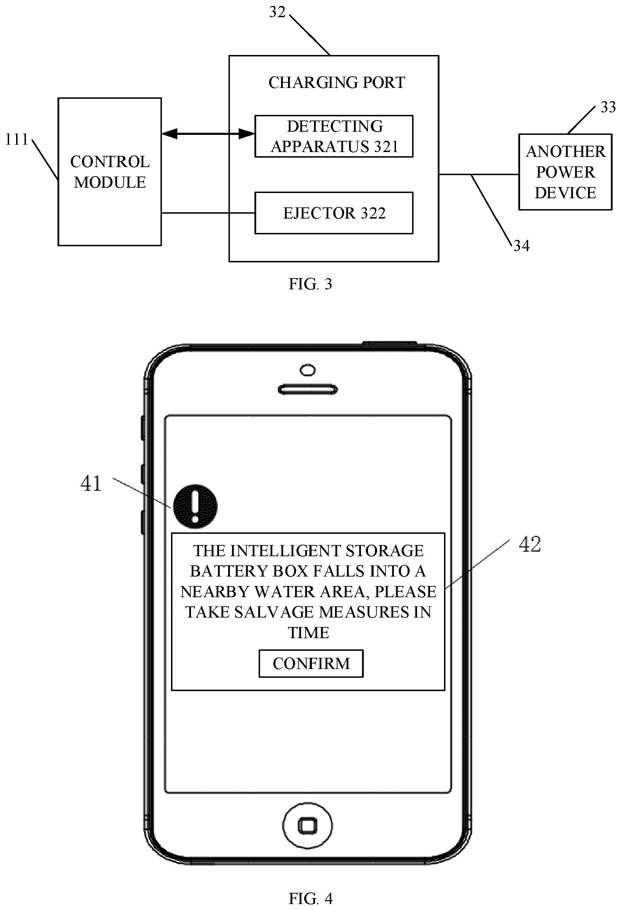

Reference can be made to FIG. 3, which is a schematic diagram of application of an ejector provided in an embodiment of the present disclosure. As illustrated FIG. 3, the control module 111 in FIG. 1 is connected to a detecting apparatus 321 and an ejector 322 that are in the charging port 32. The charging port 32 is configured to be connected to another power device 33 through a charging port on a charging wire 34. The charging port 32 includes the detecting apparatus 321 and the ejector 322. The detecting apparatus 321 is configured to detect whether the charging port 32 is in a charging state or connected to a port on the external charging wire 34. If the detecting apparatus 321 detects that the charging port is in the charging state or connected to the port on the external charging wire 34, a state prompt signal indicating that the charging port 32 is in the charging or connected state is sent to the control module 111. When the intelligent storage battery box is in the falling state, the control module 111 sends a start instruction to the ejector 322 in the charging port 32 in the charging or connected state, so that the ejector 322 executes the above actions, to eject the charging port on charging wire 34 of the another power device 33 from the charging port 32.

It can be seen that, in this example, the connection between the at least one charging port and the charging port on the charging wire of the another power device is detected and found out, a corresponding connection position can be determined, the ejector is started, and the charging port on the charging wire of the another power device in the connected state is ejected outwards. Therefore, when the intelligent storage battery box is in the falling state, the charging port of the another power device in the connected state is ejected in time, so as to prevent the another power device from being dragged into water due to a physical connection relationship. Therefore, the possible property losses caused by the fall-into-water incident can be comprehensively considered, thereby improving the comprehensiveness and reliability of the protection of the intelligent storage battery box based on the fall-into-water incident are improved.

In a possible example, the intelligent storage battery box is in communication connection with a terminal device used by a user. After the intelligent storage battery box is determined to be in the entry-water state, the method further includes the following. In response to the intelligent storage battery box being in the entry-water state, fall-into-water prompt information is sent to the terminal device. The fall-into-water prompt information indicates a fall-into-water prompt message. The fall-into-water prompt message is uses to prompt the user that the intelligent storage battery box falls into water currently.

After determining that the intelligent storage battery box is in the entry-water state, the fall-into-water prompt information is sent to the terminal device. The fall-into-water prompt information is used for displaying the fall-into-water prompt message on a display interface of the terminal device. Reference can be made to FIG. 4, which is a sketch of a prompt interface displayed on a terminal device provided in an embodiment of the present disclosure. The fall-into-water prompt message may include pattern information and text information that are adapted to a notification message of the terminal device, or prompt messages such as a notification bell, a prompt sound, etc., that are played simultaneously. As illustrated in FIG. 4, a prompt pattern 41 and writing 42, that cooperate with each other, are displayed on the display interface of the terminal device. The writing 42 may be "the intelligent storage battery box falls into a nearby water area, please take salvage measures in time" or other writing for prompting the user. Therefore, it is ensured that after the intelligent storage battery box falls into water, the user can take a corresponding salvage measure in time, to ensure the safety of the intelligent storage battery box.

It can be seen that, in this example, when the intelligent storage battery box is in the entry-water state, by sending the prompt information to the terminal device in communication connection with the intelligent storage battery box to prompt the user to salvage in time, the user is prompted to salvage the intelligent storage battery box that falls into water in time, so that the intelligent storage battery box is prevented from being soaked for a long time, the user experience is optimized, and the intelligence and timeliness of the protection of the intelligent storage battery box based on the fall-into-water incident are improved.

At S220, a space occupation state of the intelligent storage battery box is determined according to the acceleration and the humidity.

The space occupancy state includes a non-fall-into-water state and a fall-into-water state. Specifically, the non-fall-into-water state may be a state in which the intelligent storage battery box is stably placed in a dry environment such as a boat or a shore. The fall-into-water state includes a falling state and an entry-water state. The falling state refers to a state in which the intelligent storage battery box has a movement trend of falling weightlessly from air into a nearby water area. In the falling state, the intelligent storage battery box is not in contact with the water surface. The entry-water state is a state in which the intelligent storage battery box is completely falls into the water.

In a possible example, the falling state includes a falling state and an entry-water state. Determining the space occupancy state of the intelligent storage battery box according to the acceleration and the humidity includes the following. When the acceleration is detected to be greater than a first preset-acceleration and the humidity is detected to be less than a preset humidity, the intelligent storage battery box is determined to be in the falling state. When the acceleration is determined to be less than a second preset-acceleration and the humidity is determined to be greater than the preset humidity, the intelligent storage battery box is determined to be in the entry-water state. The first preset-acceleration is greater than the second preset-acceleration.

The first preset-acceleration is a preset value slightly less than the gravitational acceleration (g ≈ 9.80 m/s²), such as, 9.60 m/s², 9.50 m/s². The gravitational acceleration is an acceleration of an object in completely free fall. In combination with an actual placement position of the intelligent storage battery box, when the intelligent storage battery box has a movement trend of falling into water, there may be a certain upward force, and in this case, although the acceleration in the vertically downward direction has not reached the gravitational acceleration yet, the fall-into-water protection measure have come to the need to be taken. The first preset-acceleration as an advance prediction value to prejudge. In the vertically downward direction, when the acceleration of the intelligent storage battery box is greater than the first preset-acceleration, it is determined that the intelligent storage battery box is in a weightless state, and the protective measure is taken in time.

The second preset-acceleration is less than the first preset-acceleration, and the second preset-acceleration is slightly greater than 0. The second preset-acceleration is set to be slightly greater than 0 for following reasons. The intelligent storage battery box fluctuates along with the water surface after falling into water. Under the condition that the water surface fluctuates greatly, there may be an acceleration in a vertically downward direction. Therefore, the second preset-acceleration is set to a value slightly greater than 0 instead of 0, such as, 0.30 m/s², so as to ensure that the condition in which the intelligent storage battery box fluctuates with the water surface after falling into the water is not excluded.

The preset humidity refers to a humidity that is preset and is used for characterizing the present environment as water, such as, 98%, 99%, etc. When the humidity obtained by the at least one humidity sensor is less than the preset humidity, it indicates that any surface of the intelligent storage battery box is not in contact with the water surface, and further indicates that the intelligent storage battery box is still in a process of falling from air to water.

It can be seen that, in this example, the acceleration of the intelligent storage battery box and the humidity of the environment in which the intelligent storage battery box is located are detected, so that when the acceleration meets an acceleration condition and the humidity meets a humidity condition, the intelligent storage battery box is determined to be in the falling state, the switch of the circuit breaker is automatically cut off, and an internal power-supply circuit of the mobile power source is disconnected, and the protection measure is taken in time before the intelligent storage battery box falls into water, so as to reduce the short-circuit risk caused by water to the mobile power source after the intelligent storage battery box falls into water subsequently. Therefore, the timeliness of protecting the built-in mobile power source by the intelligent storage battery box can be improved, and the comprehensiveness and intelligence of protecting the built-in mobile power source can be improved. Accuracy. Timeliness.

At S230, in response to the space occupancy state of the intelligent storage battery box being the fall-into-water state, a fall-into-water protection start instruction is generated, and the fall-into-water floatable apparatus is controlled to inflate the floatable airbag in the folded state according to the fall-into-water protection start instruction.

The buoyancy force of the floatable airbag after inflation is completed is greater than the mass of the intelligent storage battery box and the mobile power source.

Specifically, the floatable airbag after the inflation is completed shall ensure that the box body is higher than the water surface or a waterproof part of the box body is in the water, and ensure that the connection position between the box body and the box cover is completely and always higher than the water surface by a certain distance. Thus, it is ensured that the water does not enter the interior of the box body due to the soaking in the water or the fluctuation of the water surface, thereby avoiding the built-in mobile power source soaked in the water and avoiding causing damage.

Specifically, the fall-into-water floatable apparatus can be disposed at the first function module and/or the second function module, and the position of the floatable airbag cooperates with the appearance of the inflated floatable airbag itself, so that the intelligent storage battery box is in a relatively stable state on the water surface under the buoyancy force of the floatable airbag after the floatable airbag is ejected. The relatively stable state refers to a state in which the box body has no excessive inclination angle on any side of the box body and can float in a normal fluctuation range of the water surface, so as to ensure that the intelligent storage battery box does not topple and fall.

In one possible example, the fall-into-water floatable apparatus further includes a gas generator. The gas generator includes a gas generation chamber, a gas storage chamber, and a plunger. The plunger is located between the gas generation chamber and the gas storage chamber. The plunger is configured to isolate the gas generation chamber from the gas storage chamber. An outlet of the gas storage chamber is connected to an inflation port of the floatable airbag. Controlling the fall-into-water floatable apparatus to inflate the floatable airbag in the folded state according to the fall-into-water protection start instruction, includes the following.

An inflation instruction is sent to the gas generator according to the fall-into-water protection start instruction. According to the inflation instruction, the gas generation chamber is controlled to generate gas within the preset time. The plunger is pushed by generated gas to move towards the outlet of the gas storage chamber, and gas stored in the gas storage chamber is squeezed into the floatable airbag in the folded state, so that the floatable airbag is expanded and ejected within the preset time.

The preset time is relatively short. In order to ensure that the intelligent storage battery box ejects the floatable airbag before the intelligent storage battery box is in contact with the water surface, the time for generating gas shall be controlled within a few seconds, such as 1s, 1.5s, 2s, etc., which is not limited herein.

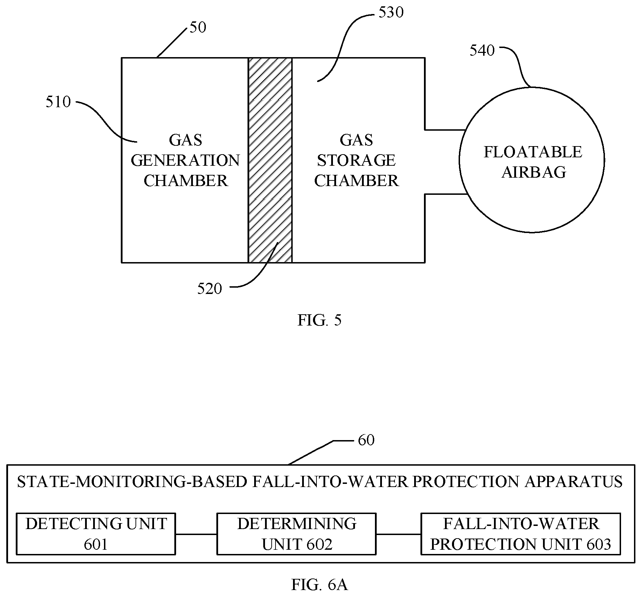

Reference can be made to FIG. 5, which is a schematic structural diagram of a fall-into-water floatable apparatus provided in an embodiment of the present disclosure. As illustrated in FIG. 5, a fall-into-water floatable apparatus 50 includes a gas generation chamber 510, a gas storage chamber 530, and a plunger 520. An outlet of the gas storage chamber 530 is connected to an inflation port of the floatable airbag 540. The principle of inflation is as follows. A large amount of gas is generated in short time by a physical manner or a chemical manner, so that the gas pressure in the gas generation chamber increases, thereby squeezing and pushing the plunger 520, and then squeezing the gas in the gas storage chamber 530 into the floatable airbag 540 to achieve inflation. Specifically, the manner for generating gas in preset time in a gas generation chamber may include a physical manner, for example, a small steel cylinder may be stored in the gas generation chamber, and a sufficient amount of gas exists in the small steel cylinder. After an inflation instruction is received, the gas in the steel cylinder is released by a manner in which a mechanical needle punctures a cylinder finish of the gas storage cylinder, so as to push the plunger 520. Alternatively, the manner for generating gas in the preset gas in the gas generation chamber may include a chemical manner, for example, a miniature explosive is placed in the gas generation chamber, and an ignition operation is performed on the explosive by using an inflation instruction, so that the gas pressure in the gas generation chamber is increased within short time, thereby pushing the plunger 520 and squeezing the gas in the gas storage chamber 530 into the floatable airbag 540.

The manner of squeezing gas by the plunger has following advantages. It is ensured that the floatable airbag completes the inflation in time. If the plunger is cancelled and the gas in the gas generation chamber is directly filled into the floatable airbag, the floatable airbag cannot be fully inflated within the preset time due to the slow speed of gas generation in the gas generation chamber at an earlier stage, so that the safety of the intelligent storage battery box cannot be ensured. However, the plunger can enable the inflation gas flow to be rapid and uniform, and the gas flow speed does not increase or decrease abruptly. In addition, it is ensured the inflation safety of the floatable airbag. Regarding a manner of generating gas by using the chemical principle, sharp particles or harmful gas may be mixed into the generated gas. If the plunger is canceled, the generated gas is directly filled into the floatable airbag, resulting in damage or corrosion of the floatable airbag.

The gas stored in the gas storage chamber may be an inert gas, such as nitrogen, so as to ensure the stability of the gas and prevent damage to the floatable airbag.

Specifically, the floatable airbag may be a polyamide fabric. The polyamide fabric is a semi-rigid foam plastic that can withstand high pressure. In addition, the polyamide fabric is vulcanized, so that the inertia force of the floatable airbag during inflation and expansion can be reduced, and thus the performance of the floatable airbag in an unfolded state can be more stable. Meanwhile, in order to enable the sealing performance of the floatable airbag for gas to be better, an inner surface of the polyamide fabric may be coated with a sealing material layer, and no pressure relief hole may be defined on the floatable airbag, so that the gas in the floatable airbag can be prevented from being automatically discharged, and the gas in the floatable airbag can be manually discharged. The floatable airbag may also be made of other materials capable of withstanding the high pressure. The embodiment of the present disclosure does not specifically limit the specific material of the floatable airbag.

It can be seen that, in this example, with the fall-into-water protection start instruction, the inflation instruction is sent to the gas generator, so as to control the gas generation chamber to generate gas, to inflate the floatable airbag in the folded state, so that the airbag is inflated in time within the preset time. Therefore, it is ensured that the intelligent storage battery box can float on the water surface through the floatable airbag after the intelligent storage battery box falls into water, thereby preventing the mobile power source from being damaged due to the water inflow inside, and improving the timeliness and reliability of protecting the built-in mobile power source by the intelligent storage battery box.

In a possible example, before controlling, according to the fall-into-water protection start instruction, the fall-into-water floatable apparatus to inflate the floatable airbag in the folded state within the preset time, the method further includes the following. A volume of gas to-be-inflated is estimated according to the mass of the intelligent storage battery box and the mobile power source. A position of the plunger between the gas generation chamber and the gas storage chamber is adjusted according to the volume of the gas to-be-inflated, to make a volume of gas stored in the gas storage chamber be equal to the volume of the gas to-be-inflated.

The buoyancy force generated by the estimated volume of the gas to-be-inflated shall be greater than or equal to the gravity of the intelligent storage battery box. For example, the mass of the intelligent storage battery box (calculated together with the mass of the built-in mobile power source) is about 30 kg. It can be seen from the buoyancy formula of *F*[buoyancy] = *G*[displaced] = *ρ*[liquid]*gV*[displaced] that, the gravity G generated by the intelligent storage battery box satisfies: *G = mg,* which is 30 kg × 10 N/kg = 300 N, so that the rough estimated value of *V*[displaced] is 0.3 m³, and thus the gas to-be-inflated shall be greater than 0.3 m³ or equal to 0.3 m³.

The function of the gas generation chamber is to provide the pushing force for the plunger, so as to squeeze the gas in the gas storage chamber into the floatable airbag to complete the inflation process. Thus, the inflation gas volume is the gas volume that is preset in the gas storage chamber. By sliding the plunger in advance, the position of the plunger is set, so that the gas volume in the gas storage chamber is adjusted. It may be understood that, when the position of the plunger is adjusted, the floatable airbag has been not mounted yet, and the gas outlet of the gas storage chamber is externally connected to air or other gaseous environment.

In other possible examples, a gas vent is defined on the outside of the floatable airbag. After the intelligent storage battery box is in the entry-water state, the method further includes the following. A humidity of an environment in which the intelligent storage battery box is located is continuously monitored. When each humidity of the at least one humidity sensor is less than the preset humidity, the gas vent is controlled to open to discharge the gas in the floatable airbag, so that the floatable airbag re-presents a folded state. In this way, the floatable airbag that is inflated and ejected can be automatically vented in a dry environment in which the intelligent storage battery box is considered to have been salvaged, so that the user can subsequently remount the floatable airbag in the folded state back to the first function module and/or the second function module, thereby optimizing the user experience.

It can be seen that in this example, the volume of the gas to-be-inflated is estimated by determining the mass of the intelligent storage battery box, and the position of the plunger is adjusted in advance so as to satisfy that the volume of the inflation gas is greater than or equal to the volume of the gas to-be-inflated. Thus, the volume of the inflation gas can be accurately controlled, and the risk of insufficient buoyancy due to an insufficient amount of inflation gas or the risk of the airbag breakage due to an excessive amount of inflation gas is reduced, thereby improving the safety and reliability of inflating the floatable airbag in the fall-into-water floatable apparatus.

It can be seen that, in the embodiment of the present disclosure, the acceleration of the intelligent storage battery box and the humidity of the environment in which the intelligent storage battery box is located are detected by the control module, and then the space occupation state of the intelligent storage battery box is determined according to the acceleration and the humidity. The space occupation state includes the non-fall-into-water state and the fall-into-water state. If the space occupancy state of the intelligent storage battery box is the fall-into-water state, the fall-into-water protection start instruction is generated, and the fall-into-water floatable apparatus is controlled to inflate the floatable airbag in the folded state according to the fall-into-water protection start instruction, so that the intelligent storage battery box floats on the water. Therefore, the intelligent storage battery box can determine when to take the fall-into-water protection measure according to the space occupation state, and the floatable airbag can be ejected in short time to protect the mobile power source built in the intelligent storage battery box from being soaked. Meanwhile, the user can find the intelligent storage battery box floating on the water in time, thereby improving the comprehensiveness and intelligence of protecting the built-in mobile power source by the intelligent storage battery box.

Consistent with the embodiments described above, reference can be made to FIG. 6A, which is a block diagram of function units of a state-monitoring-based fall-into-water protection apparatus provided in an embodiment of the present disclosure. The apparatus is applied to the control module 111 in the intelligent storage battery box 10 as illustrated in FIG. 1. The state-monitoring-based fall-into-water protection apparatus 60 includes a detecting unit 601, a determining unit 602, and a fall-into-water protection unit 603. The detecting unit 601 is configured to detect an acceleration of the intelligent storage battery box and a humidity of an environment in which the intelligent storage battery box is located. The determining unit 602 is configured to determine a space occupation state of the intelligent storage battery box according to the acceleration and the humidity. The space occupation state includes a non-fall-into-water state and the fall-into-water state. The fall-into-water protection unit 603 is configured to, if the space occupancy state of the intelligent storage battery box is the fall-into-water state, generate a fall-into-water protection start instruction, and control, according to the fall-into-water protection start instruction, the fall-into-water floatable apparatus to inflate the floatable airbag in the folded state within the preset time. A buoyancy force of the floatable airbag after inflation is completed is greater than the mass of the intelligent storage battery box and the mobile power source.

In a possible example, the fall-into-water floatable apparatus further includes a gas generator. The gas generator includes a gas generation chamber, a gas storage chamber, and a plunger. The plunger is located between the gas generation chamber and the gas storage chamber. The plunger is configured to isolate the gas generation chamber from the gas storage chamber. An outlet of the gas storage chamber is connected to an inflation port of the floatable airbag. In terms of controlling the fall-into-water floatable apparatus to inflate the airbag in the folded state according to the fall-into-water protection start instruction, the fall-into-water protection unit 603 is specifically configured to send an inflation instruction to the gas generator according to the fall-into-water protection start instruction, and control the gas generation chamber to generate gas within the preset time according to the inflation instruction. The plunger is pushed by generated gas to move towards the outlet of the gas storage chamber, and gas stored in the gas storage chamber is squeezed into the floatable airbag in the folded state, so that the floatable airbag is expanded and ejected within the preset time.

In a possible example, the falling state includes a falling state and an entry-water state. In terms of determining the space occupancy state of the storage battery box according to the acceleration and the humidity, the detecting unit 601 is specifically configured to determine that the intelligent storage battery box is in the falling state when the acceleration is detected to be greater than a first preset-acceleration and the humidity is detected to be less than a preset humidity, and determine that the intelligent storage battery box is in the entry-water state when the acceleration is determined to be less than a second preset-acceleration and the humidity is determined to be greater than the preset humidity. The first preset-acceleration is greater than the second preset-acceleration.

In a possible example, a circuit breaker is disposed at the first function module or the second function module. The circuit breaker is configured to control power supply of the mobile power source. After the intelligent storage battery box is determined to be in the falling state, the detecting unit 601 is further specifically configured to cut off a switch of the circuit breaker.

In a possible example, the box cover further includes at least one charging port. The at least one charging port is configured to supply power to a device connected to the at least one charging port through the mobile power source. An ejector is disposed at the at least one charging port. The ejector includes a spring and an ejector rod connected to the spring. After the switch of the circuit breaker is cut off, the detecting unit 601 is specifically further configured to detect whether at least one charging port is connected to a charging port on a charging wire of another power device. In response to detecting that the at least one charging port is connected to the charging port on the charging wire of the another power device, the detecting unit 601 is configured to determine a position of a charging port of the at least one charging port connected to the charging port on the charging wire of the another power device, and start an ejector corresponding to the position of the charging port of the at least one charging port connected to the charging port on the charging wire of the another power device, to eject the spring in a compressed state, to outwardly push the charging port on the charging wire of the another power device in a connected state through the ejector rod.

In a possible example, before the fall-into-water floatable apparatus is controlled to inflate the airbag in the folded state within the preset time according to the fall-into-water protection start instruction, the fall-into-water protection unit 603 is specifically further configured to estimate a volume of the gas to-be-inflated according to the mass of the intelligent storage battery box and the mobile power source, and adjust a position of the plunger between the gas generation chamber and the gas storage chamber according to the volume of the gas to-be-inflated, to make a volume of gas stored in the gas storage chamber be equal to the volume of the gas to-be-inflated.

In a possible example, the intelligent storage battery box is in communication connection with a terminal device used by a user; After the intelligent storage battery box is determined to be in the entry-water state, the detecting unit 601 is further specifically configured to send fall-into-water prompt information to the terminal device. The fall-into-water prompt information indicates a fall-into-water prompt message. The fall-into-water prompt message is used to prompt the user that the intelligent storage battery box falls into water currently.

It can be understood that, since the method embodiment and the apparatus embodiment are different presentation forms of the same technical concept, the content of the method embodiment part in the present disclosure may be synchronously adapted to the device embodiment part, and will not be repeated here.

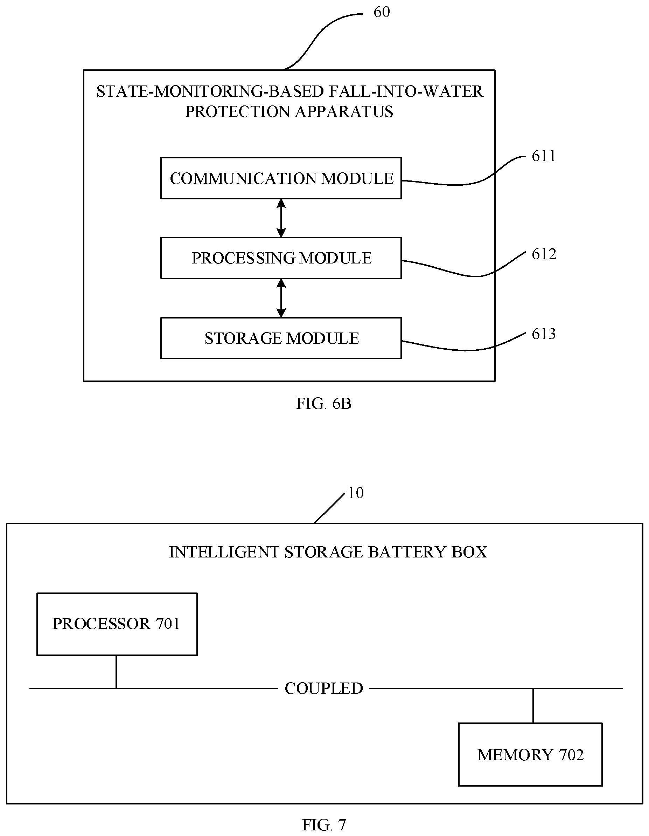

FIG. 6B is not covered by the claimed invention. In the case that integrated units are used, reference can be made to FIG. 6B, which is a block diagram of function units of a state-monitoring-based fall-into-water protection apparatus provided in another embodiment of the present disclosure. In FIG. 6B, the state-monitoring-based fall-into-water protection apparatus 60 includes a processing module 612 and a communication module 611. The processing module 612 is configured to control and manage actions of the state-monitoring-based fall-into-water protection apparatus, such as operations of the detecting unit 601, the determining unit 602, and the fall-into-water protection unit 603, and/or configured to perform other processes of the techniques described herein. The communications module 611 is configured to support interaction between the state-monitoring-based fall-into-water protection apparatus and other devices. As illustrated in FIG. 6B, the state-monitoring-based fall-into-water protection apparatus can further include a storage module 613. The storage module 613 is configured to store program codes and data of the state-monitoring-based fall-into-water protection apparatus.

The processing module 612 may be a processor or controller, for example, may be a central processing unit (CPU), a general-purpose processor, a digital signal processor (DSP), an application-specific integrated circuit (ASIC), a field-programmable gate array (FPGA), or another programmable logic device, a transistor logic device, a hardware component, or any combination thereof. The processing unit 612 may implement or execute various example logical blocks, modules, and circuits described with reference to content disclosed in the present disclosure. Alternatively, the processor may be a combination of processors implementing a computing function, for example, a combination of one or more microprocessors, or a combination of a DSP and a microprocessor, etc. The communication module 611 may be a transceiver, a radio frequency (RF) circuit, a communication port, or the like. The storage module 613 may be a memory.

All related content of each scenario in the above-mentioned method embodiments may be cited in function descriptions of a corresponding function module, which will not be elaborated herein. The above-mentioned state-monitoring-based fall-into-water protection apparatus 60 can execute the state-monitoring-based fall-into-water protection method as illustrated in FIG. 2.

All or some of the foregoing embodiments may be implemented by using software, hardware, firmware, or any combination thereof. When the software is used to implement the embodiments, the embodiments may be implemented completely or partially in a form of a computer program product. The computer program product includes one or more computer instructions or computer programs. When the computer instructions or computer programs are loaded or executed on a computer, the procedures or functions according to the embodiments of the present disclosure are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (DVD)), a semiconductor medium (for example, a solid state disk (SSD)), or the like.

FIG. 7 is a block diagram of function units of an intelligent storage battery box provided in an embodiment of the present disclosure. As illustrated in FIG. 7, the intelligent storage battery box 10 in FIG. 1 may further include one or more components as follows: a processor 701, and a memory 702 coupled to the processor 701. The memory 702 may store one or more computer programs, and the one or more computer programs may be configured to, when executed by one or more processor 701, implement the methods described in the above embodiments.

The processor 701 may include one or more processing cores. The processor 701 uses various ports and lines to connect various parts in the intelligent storage battery box through, and executes various functions of the intelligent storage battery box and processes data by running or executing instructions, programs, code sets, or instruction sets stored in the memory 702 and calling data stored in the memory 702. Optionally, the processor 701 may be implemented with at least one of the following hardware form of a DSP, an FPGA, a programmable logic array (PLA). The processor 701 may integrate one or a combination of some of a CPU, a graphics processing unit (GPU), a modem, and the like. The CPU mainly handles the operating system, user interface, and applications. The GPU is used to render and draw the display content. The modem is used to process wireless communication. It can be understood that, the above-mentioned modem may be implemented by a single communication chip without being integrated into the processor 701.

The memory 702 may include a random access memory (RAM) and read-only memory (ROM). The memory 702 may be configured to store an instruction, a program, a code, a code set, or an instruction set. The memory 702 may include a program storage area and a data storage area, where the program storage area may store an instruction for realizing an operating system, an instruction for realizing at least one function (such as a touch function, a sound playing function, an image playing function), an instruction for realizing the above-mentioned various method embodiments. The data storage area may also store data created by the intelligent storage battery box in use. It can be understand that, the intelligent storage battery box may include more or fewer structural components than illustrated in the above structural diagram, which will not be limited herein.

A computer storage medium is further provided in an embodiment of the present disclosure. The computer storage medium is configured to store computer programs/instructions which, when executed by a processor, are operable to implement some or all of operations in any method described in the foregoing method embodiments.

A computer program product is further provided in an embodiment of the present disclosure. The computer program product includes a non-transitory computer-readable storage medium configured to store computer programs. The computer programs are operable to enable a computer to perform some or all of operations in any method described in the foregoing method embodiments.

It may be understood that in the various embodiments of the present disclosure, the numbering of each process mentioned above does not imply the order of execution, and the order of execution of each process shall be determined by its function and inherent logic, which shall not constitute any limitation to the implementation process of the implementations of the present disclosure.

It will be appreciated that the methods, apparatuses, and systems disclosed in several embodiments provided in the present disclosure may also be implemented in various other manners. For example, the above apparatus embodiments are merely illustrative, e.g., the division of units is merely a division of logical functions, and other manners of division may also available in practice, e.g., multiple units or assemblies may be combined or may be integrated into another system, or some features may be omitted or not performed. In other respects, the coupling or direct coupling or communication connection as illustrated or discussed may be an indirect coupling or communication connection through some ports, apparatuses, or units, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of implementations.

In addition, various function units in various embodiments of the present disclosure may be integrated into one processing unit, or each of the units may exist alone physically, or two or more units are integrated into one unit. The integrated unit may be implemented in a form of hardware, or may be implemented in a form of hardware in addition to a software function unit.

The integrated unit may be stored in a computer-readable storage medium when the foregoing integrated unit is implemented in a form of a software function unit. The software function unit is stored in a storage medium and includes several instructions for instructing a computer device (which may be a personal computer, a server, or a network device) to perform some of the operations of the methods described in various embodiments of the present disclosure. The foregoing storage medium includes a USB flash drive, a removable hard disk, a magnetic disk, an optical disk, a transitory memory, or a non-transitory memory. The non-transitory memory may be a ROM, a programmable ROM (PROM), an erasable PROM (EPROM), an electrically EPROM (EEPROM), or a flash memory. The transitory memory may be a RAM, used as an external cache. Through example but not limitative description, many forms of RAMs may be used, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM), and other media that can store program codes.

## Claims

1. A state-monitoring-based fall-into-water protection method, for an intelligent storage battery box (10), wherein a battery compartment of the intelligent storage battery box (10) accommodates a mobile power source, and the intelligent storage battery box (10) comprises a box body (120), a box cover (110), and a binding band for fixing the box body (120) and the box cover (110); the box cover (110) comprises a control module (111), a handle module (114), a first function module (113) and a second function module (112) respectively disposed at two sides of a handle of the handle module (114), a first fixing buckle, and a second fixing buckle, at least one humidity sensor is disposed around the box body (120), an acceleration sensor (115) is further disposed at the box cover (110), and the acceleration sensor (115) is configured to obtain an acceleration in a vertically downward direction; the handle module (114) comprises the handle and a base cover-plate for supporting the handle, wherein the base cover-plate is integrated with the first function module (113) and the second function module (112); and the first function module (113) comprises a positive power-source port, and the second function module (112) comprises a negative power-source port, wherein an electrical loop led out from the positive power-source port and the negative power-source port is configured to supply power to the control module (111);
the first function module (113) or the second function module (112) is further provided with a fall-into-water floatable apparatus (50), and the fall-into-water floatable apparatus (50) comprises a floatable airbag (540) in a folded state; and the method comprises:
detecting (S210), by the control module (111), an acceleration of the intelligent storage battery box (10) and a humidity of an environment in which the intelligent storage battery box (10) is located; in response to detecting that the acceleration is greater than a first preset-acceleration and the humidity is less than a preset humidity, determining, by the control module (111), that a space occupation state of the intelligent storage battery box (10) is a falling state of a fall-into-water state, wherein the preset humidity is used for characterizing a humidity of an environment that the intelligent storage battery box (10) is currently located in water, the space occupancy state comprises a non-fall-into-water state and the fall-into-water state, and the fall-into-water state comprises the falling state and an entry-water state; and in response to detecting that the acceleration is less than a second preset-acceleration and the humidity is greater than the preset humidity, determining, by the control module (111), that the space occupancy state of the intelligent storage battery box (10) is the entry-water state of the fall-into-water state, wherein the first preset-acceleration is greater than the second preset-acceleration;
in response to the space occupancy state of the intelligent storage battery box (10) being the falling state of the fall-into-water state, generating (S230), by the control module (111), a fall-into-water protection start instruction, and controlling, by the control module (111), according to the fall-into-water protection start instruction, the fall-into-water floatable apparatus (50) to inflate the floatable airbag (540) in the folded state within preset time, wherein a buoyancy force of the floatable airbag (540) after inflation is completed is greater than a mass of the intelligent storage battery box (10) and the mobile power source, and a duration of the preset time is shorter than an interval duration from a moment at which the intelligent storage battery box (10) is in the falling state to a moment at which the intelligent storage battery box (10) is in the entry-water state;
cutting off, by the control module (111), a switch of a circuit breaker, wherein the circuit breaker is disposed at the first function module (113) or the second function module (112), and the circuit breaker is configured to control power supply of the mobile power source; and
detecting, by the control module (111), whether at least one charging port (32) of the box cover (110) is connected to a charging port on a charging wire (34) of another power device (33); in response to detecting that the at least one charging port (32) of the box cover (110) is connected to the charging port on the charging wire (34) of the another power device (33), determining, by the control module (111), a position of a charging port of the at least one charging port (32) of the box cover (110) connected to the charging port on the charging wire (34) of the another power device (33); and starting, by the control module (111), an ejector (322) corresponding to the position of the charging port of the at least one charging port (32) of the box cover (110) connected only to the inserted end of the charging wire (34) of the another power device (33), to eject a spring in a compressed state, to outwardly push the charging wire (34) of the another power device (33) in a connected state through an ejector rod, wherein the at least one charging port (32) is disposed at the box cover (110), the at least one charging port (32) of the box cover (110) is configured to supply power to a device connected to the at least one charging port (32) of the box cover (110) through the mobile power source, the at least one charging port (32) of the box cover (110) comprises the ejector (322), and the ejector (322) comprises the spring and the ejector rod connected to the spring.

2. The method of claim 1, wherein the fall-into-water floatable apparatus (50) further comprises a gas generator, the gas generator comprises a gas generation chamber (510), a gas storage chamber (530), and a plunger (520), the plunger (520) is located between the gas generation chamber (510) and the gas storage chamber (530), the plunger (520) is configured to isolate the gas generation chamber (510) from the gas storage chamber (530), and an outlet of the gas storage chamber (530) is connected to an inflation port of the floatable airbag (540); and controlling, by the control module (111), according to the fall-into-water protection start instruction, the fall-into-water floatable apparatus (50) to inflate the floatable airbag (540) in the folded state within the preset time, comprises:
sending, by the control module (111), an inflation instruction to the gas generator according to the fall-into-water protection start instruction; and
controlling, by the control module (111), the gas generation chamber (510) to generate gas within the preset time according to the inflation instruction, wherein the plunger (520) is pushed by generated gas to move towards the outlet of the gas storage chamber (530), and gas stored in the gas storage chamber (530) is squeezed into the floatable airbag (540) in the folded state, to make the floatable airbag (540) be expanded and ejected within the preset time.

3. The method of claim 2, wherein before controlling, by the control module (111), according to the fall-into-water protection start instruction, the fall-into-water floatable apparatus (50) to inflate the floatable airbag (540) in the folded state, the method further comprises:
estimating, by the control module (111), a volume of gas to-be-inflated according to the mass of the intelligent storage battery box (10) and the mobile power source; and
adjusting, by the control module (111), a position of the plunger (520) between the gas generation chamber (510) and the gas storage chamber (530) according to the volume of the gas to-be-inflated, to make a volume of the gas stored in the gas storage chamber (530) be equal to the volume of the gas to-be-inflated.

4. The method of claim 1, wherein the intelligent storage battery box (10) is in communication connection with a terminal device used by a user; and after determining, by the control module (111), that the space occupancy state of the intelligent storage battery box (10) is in the entry-water state of the fall-into-water state, the method further comprises:
sending, by the control module (111), fall-into-water prompt information to the terminal device in response to the intelligent storage battery box (10) being the entry-water state, wherein the fall-into-water prompt information indicates a fall-into-water prompt message, and the fall-into-water prompt message is used to prompt the user that the intelligent storage battery box (10) falls into water currently.

5. A state-monitoring-based fall-into-water protection apparatus (60), for a control module (111) in an intelligent storage battery box (10), wherein a battery compartment of the intelligent storage battery box (10) accommodates a mobile power source, and the intelligent storage battery box (10) comprises a box body (120), a box cover (110), and a binding band for fixing the box body (120) and the box cover (110); the box cover (110) comprises a control module (111), a handle module (114), a first function module (113) and a second function module (112) respectively disposed at two sides of a handle of the handle module (114), a first fixing buckle, and a second fixing buckle, at least one humidity sensor is disposed around the box body (120), an acceleration sensor (115) is further disposed at the box cover (110), and the acceleration sensor (115) is configured to obtain an acceleration in a vertically downward direction; the handle module (114) comprises the handle and a base cover-plate for supporting the handle, wherein the base cover-plate is integrated with the first function module (113) and the second function module (112); the first function module (113) comprises a positive power-source port, and the second function module (112) comprises a negative power-source port, wherein an electrical loop led out from the positive power-source port and the negative power-source port is configured to supply power to the control module (111); the first function module (113) or the second function module (112) is further provided with a fall-into-water floatable apparatus (50), and the fall-into-water floatable apparatus (50) comprises a floatable airbag (540) in a folded state; and the state-monitoring-based fall-into-water protection apparatus (60) comprises:
a detecting unit (601), configured to detect an acceleration of the intelligent storage battery box (10) and a humidity of an environment in which the intelligent storage battery box (10) is located;
a determining unit (602), configured to determine that a space occupation state of the intelligent storage battery box (10) is a falling state of a fall-into-water state, in response to detecting that the acceleration is greater than a first preset-acceleration and the humidity is less than a preset humidity, wherein the preset humidity is used for characterizing a humidity of an environment that the intelligent storage battery box (10) is currently located in water, the space occupancy state comprises a non-fall-into-water state and the fall-into-water state, and the fall-into-water state comprises the falling state and an entry-water state; and determine that the space occupancy state of the intelligent storage battery box (10) is the entry-water state of the fall-into-water state, in response detecting that the acceleration is less than a second preset-acceleration and the humidity is detected to be greater than the preset humidity, wherein the first preset-acceleration is greater than the second preset-acceleration; and
a fall-into-water protection unit (603), configured to, in response to the space occupancy state of the intelligent storage battery box (10) being the falling state of the fall-into-water state, generate a fall-into-water protection start instruction, and control, according to the fall-into-water protection start instruction, the fall-into-water floatable apparatus (50) to inflate the floatable airbag (540) in the folded state within preset time, wherein a buoyancy force of the floatable airbag (540) after inflation is completed is greater than a mass of the intelligent storage battery box (10) and the mobile power source, and a duration of the preset time is shorter than an interval duration from a moment at which the intelligent storage battery box (10) is in the falling state to a moment at which the intelligent storage battery box (10) is in the entry-water state;
wherein
the detecting unit (601) is configured to cut off a switch of a circuit breaker, the circuit breaker is disposed at the first function module (113) or the second function module (112), and the circuit breaker is configured to control power supply of the mobile power source; and
the detecting unit (601) is configured to detect whether the at least one charging port (32) is connected to a charging port on a charging wire (34) of another power device (33); in response to detecting that the at least one charging port (32) is connected to the charging port on the charging wire (34) of the another power device (33), determine a position of a charging port of the at least one charging port (32) connected to the charging port on the charging wire (34) of the another power device (33); and start an ejector (322) corresponding to the location of the charging port of the at least one charging port (32) connected only to the inserted end of charging wire (34) of the another power device (33), to eject a spring in a compressed state, to outwardly push the charging port on the charging wire (34) of the another power device (33) in a connected state through an ejector rod, wherein the at least one charging port (32) is disposed at the box cover (110), the at least one charging port (32) is configured to supply power to a device connected to the at least one charging port (32) through the mobile power source, the at least one charging port (32) comprises the ejector (322), and the ejector (322) comprises the spring and the ejector rod connected to the spring.

6. An intelligent storage battery box (10) according to claim 5 with the state-monitoring-based fall-into-water protection apparatus (60) according to claim 5, the intelligent storage battery box (10) comprising a processor (701), a memory (702), and one or more programs, wherein the one or more programs are stored in the memory (702) and configured to be executed by the processor (701), and the one or more programs comprise instructions for executing the operations in the method of any one of claims 1 to 4.

7. A computer-readable storage medium, configured to cause the state-monitoring-based fall-into-water protection apparatus of claim 5 to carry out the method of any one of claims 1 to 4.

## Patentansprüche

1. Zustandsüberwachungsbasiertes Verfahren zum Schutz vor dem Hineinfallen in Wasser, für einen intelligenten Speicherbatteriekasten (10), wobei ein Batteriefach des intelligenten Speicherbatteriekastens (10) eine mobile Stromquelle aufnimmt, und der intelligente Speicherbatteriekasten (10) einen Kastenkörper (120), einen Kastendeckel (110) und ein Bindeband zur Befestigung des Kastenkörpers (120) und des Kastendeckels (110) umfasst; der Kastendeckel (110) ein Steuermodul (111), ein Griffmodul (114), ein erstes Funktionsmodul (113) und ein zweites Funktionsmodul (112), die jeweils an zwei Seiten eines Griffs des Griffmoduls (114) angeordnet sind, eine erste Befestigungsschnalle und eine zweite Befestigungsschnalle umfasst, mindestens ein Feuchtigkeitssensor um den Kastenkörper (120) angeordnet ist, ein Beschleunigungssensor (115) weiter am Kastendeckel (110) angeordnet ist, und der Beschleunigungssensor (115) so ausgebildet ist, dass er eine Beschleunigung in vertikaler Abwärtsrichtung erhält; das Griffmodul (114) den Griff und eine Bodenabdeckplatte zur Abstützung des Griffs umfasst, wobei die Bodenabdeckplatte mit dem ersten Funktionsmodul (113) und dem zweiten Funktionsmodul (112) integriert ist; und das erste Funktionsmodul (113) einen positiven Stromquellenanschluss umfasst, und das zweite Funktionsmodul (112) einen negativen Stromquellenanschluss umfasst, wobei eine elektrische Schleife, die aus dem positiven Stromquellenanschluss und dem negativen Stromquellenanschluss herausgeführt wird, so ausgebildet ist, dass sie das Steuermodul (111) mit Strom versorgt;
das erste Funktionsmodul (113) oder das zweite Funktionsmodul (112) weiter mit einer schwimmfähigen Einrichtung zum Hineinfallen in Wasser (50) versehen ist, und die schwimmfähige Einrichtung zum Hineinfallen in Wasser (50) einen schwimmfähigen Airbag (540) in einem gefalteten Zustand umfasst; und das Verfahren Folgendes umfasst:
Erkennen (S210), durch das Steuermodul (111), einer Beschleunigung des intelligenten Speicherbatteriekastens (10) und einer Feuchtigkeit einer Umgebung, in der sich der intelligente Speicherbatteriekasten (10) befindet; als Reaktion auf das Erkennen, dass die Beschleunigung größer als eine erste voreingestellte Beschleunigung ist und die Luftfeuchtigkeit kleiner als eine voreingestellte Luftfeuchtigkeit ist, Bestimmen, durch das Steuermodul (111), dass ein Raumbelegungszustand des intelligenten Speicherbatteriekastens (10) ein fallender Zustand eines Zustands zum Hineinfallen in Wasser ist, wobei die voreingestellte Luftfeuchtigkeit zum Charakterisieren einer Luftfeuchtigkeit einer Umgebung verwendet wird, in der sich der intelligente Speicherbatteriekasten (10) derzeit in Wasser befindet, der Raumbelegungszustand einen Zustand zum Nicht-Hineinfallen in Wasser und den Zustand zum Hineinfallen in Wasser umfasst, und der Zustand zum Hineinfallen in Wasser den fallenden Zustand und einen Zustand zum Eindringen in Wasser umfasst, und als Reaktion auf das Erkennen, dass die Beschleunigung geringer ist als eine zweite voreingestellte Beschleunigung und die Luftfeuchtigkeit größer ist als die voreingestellte Luftfeuchtigkeit, Bestimmen, durch das Steuermodul (111), dass der Raumbelegungszustand des intelligenten Speicherbatteriekastens (10) der Zustand zum Eindringen in Wasser des Zustands zum Hineinfallen in Wasser ist, wobei die erste voreingestellte Beschleunigung größer ist als die zweite voreingestellte Beschleunigung;
als Reaktion darauf, dass der Raumbelegungszustand des intelligenten Speicherbatteriekastens (10) der fallende Zustand des Zustands zum Hineinfallen in Wasser ist, Erzeugen (S230), durch das Steuermodul (111), einer Startanweisung zum Schutz vor dem Hineinfallen in Wasser und Steuern, durch das Steuermodul (111), gemäß der Startanweisung zum Schutz vor dem Hineinfallen in Wasser, der schwimmfähigen Einrichtung zum Hineinfallen in Wasser (50), um den schwimmfähigen Airbag (540) in dem gefalteten Zustand innerhalb einer voreingestellten Zeit aufzublasen, wobei eine Auftriebskraft des schwimmfähigen Airbags (540) nach Abschluss des Aufblasens größer ist als eine Masse des intelligenten Speicherbatteriekastens (10) und der mobilen Stromquelle, und eine Dauer der voreingestellten Zeit kürzer ist als eine Intervalldauer von einem Zeitpunkt, an dem sich der intelligente Speicherbatteriekasten (10) im fallenden Zustand befindet, bis zu einem Zeitpunkt, an dem sich der intelligente Speicherbatteriekasten (10) im Zustand zum Eindringen in Wasser befindet;
Abschalten, durch das Steuermodul (111), eines Schalters eines Leistungsschalters, wobei der Leistungsschalter am ersten Funktionsmodul (113) oder dem zweiten Funktionsmodul (112) angeordnet ist, und der Leistungsschalter so ausgebildet ist, dass er die Stromversorgung der mobilen Stromquelle steuert; und
Erkennen, durch das Steuermodul (111), ob mindestens ein Ladeanschluss (32) des Kastendeckels (110) mit einem Ladeanschluss an einem Ladekabel (34) einer anderen Leistungsvorrichtung (33) verbunden ist; als Reaktion auf das Erkennen, dass der mindestens eine Ladeanschluss (32) des Kastendeckels (110) mit dem Ladeanschluss am Ladekabel (34) der anderen Leistungsvorrichtung (33) verbunden ist, Bestimmen, durch das Steuermodul (111), einer Position eines Ladeanschlusses des mindestens einen Ladeanschlusses (32) des Kastendeckels (110), der mit dem Ladeanschluss am Ladekabel (34) der anderen Leistungsvorrichtung (33) verbunden ist; und Starten, durch das Steuermodul (111), eines Auswerfers (322), der der Position des Ladeanschlusses des mindestens einen Ladeanschlusses (32) des Kastendeckels (110) entspricht, der nur mit dem eingeführten Ende des Ladekabels (34) der anderen Leistungsvorrichtung (33) verbunden ist, um eine Feder in einem zusammengedrückten Zustand auszuwerfen, um das Ladekabel (34) der anderen Leistungsvorrichtung (33) in einem verbundenen Zustand durch eine Auswerferstange nach außen zu drücken, wobei der mindestens eine Ladeanschluss (32) am Kastendeckel (110) angeordnet ist, der mindestens eine Ladeanschluss (32) des Kastendeckels (110) so ausgebildet ist, dass er eine mit dem mindestens einen Ladeanschluss (32) des Kastendeckels (110) durch die mobile Stromquelle verbundene Vorrichtung mit Strom versorgt, der mindestens eine Ladeanschluss (32) des Kastendeckels (110) den Auswerfer (322) umfasst, und der Auswerfer (322) die Feder und die mit der Feder verbundene Auswerferstange umfasst.

2. Verfahren nach Anspruch 1, wobei die schwimmfähige Einrichtung zum Hineinfallen in Wasser (50) weiter einen Gasgenerator umfasst, der Gasgenerator eine Gaserzeugungskammer (510), eine Gasspeicherkammer (530) und einen Kolben (520) umfasst, der Kolben (520) sich zwischen der Gaserzeugungskammer (510) und der Gasspeicherkammer (530) befindet, der Kolben (520) so ausgebildet ist, dass er die Gaserzeugungskammer (510) von der Gasspeicherkammer (530) isoliert, und ein Auslass der Gasspeicherkammer (530) mit einem Aufblasanschluss des schwimmfähigen Airbags (540) verbunden ist; und Steuern, durch das Steuermodul (111), gemäß der Startanweisung zum Schutz vor dem Hineinfallen in Wasser, der schwimmfähigen Einrichtung zum Hineinfallen in Wasser (50) zum Aufblasen des schwimmfähigen Airbags (540) im gefalteten Zustand innerhalb der voreingestellten Zeit, umfassend:
Senden, durch das Steuermodul (111), einer Aufblasanweisung an den Gasgenerator gemäß der Startanweisung zum Schutz vor dem Hineinfallen in Wasser; und
Steuern, durch das Steuermodul (111), der Gaserzeugungskammer (510), um innerhalb der voreingestellten Zeit gemäß der Aufblasanweisung Gas zu erzeugen, wobei der Kolben (520) durch das erzeugte Gas in Richtung des Auslasses der Gasspeicherkammer (530) gedrückt wird und das in der Gasspeicherkammer (530) gespeicherte Gas in den schwimmfähigen Airbag (540) im gefalteten Zustand gedrückt wird, um den schwimmfähigen Airbag (540) innerhalb der voreingestellten Zeit zu entfalten und auszuwerfen.

3. Verfahren nach Anspruch 2, wobei das Verfahren vor dem Steuern, durch das Steuermodul (111), gemäß der Startanweisung zum Schutz vor dem Hineinfallen in Wasser, der schwimmfähigen Einrichtung zum Hineinfallen in Wasser (50) zum Aufblasen des schwimmfähigen Airbags (540) im gefalteten Zustand weiter Folgendes umfasst:
Schätzen, durch das Steuermodul (111), eines einzublasenden Gasvolumens gemäß der Masse des intelligenten Speicherbatteriekastens (10) und der mobilen Stromquelle; und
Einstellen, durch das Steuermodul (111), einer Position des Kolbens (520) zwischen der Gaserzeugungskammer (510) und der Gasspeicherkammer (530) gemäß dem Volumen des einzublasenden Gases, damit das Volumen des in der Gasspeicherkammer (530) gespeicherten Gases dem Volumen des einzublasenden Gases entspricht.

4. Verfahren nach Anspruch 1, wobei der intelligente Speicherbatteriekasten (10) in Kommunikationsverbindung mit einer von einem Benutzer verwendeten Endvorrichtung steht; und nach dem Bestimmen, durch das Steuermodul (111), dass sich der Raumbelegungszustand des intelligenten Speicherbatteriekastens (10) im Zustand zum Eindringen in Wasser des Zustands zum Hineinfallen in Wasser befindet, das Verfahren weiter Folgendes umfasst:
Senden, durch das Steuermodul (111), von Warn-Informationen zum Hineinfallen in Wasser an die Endvorrichtung als Reaktion darauf, dass sich der intelligente Speicherbatteriekasten (10) in dem Zustand des Eindringens in Wasser befindet, wobei die Warn-Informationen zum Hineinfallen in Wasser eine Warn-Meldung zum Hineinfallen in Wasser angibt, und die Warn-Meldung zum Hineinfallen in Wasser verwendet wird, um den Benutzer zu warnen, dass der intelligente Speicherbatteriekasten (10) derzeit ins Wasser fällt.

5. Zustandsüberwachungsbasierte Einrichtung zum Schutz vor dem Hineinfallen in Wasser (60) für ein Steuermodul (111) in einem intelligenten Speicherbatteriekasten (10), wobei ein Batteriefach des intelligenten Speicherbatteriekastens (10) eine mobile Stromquelle aufnimmt, und der intelligente Speicherbatteriekasten (10) einen Kastenkörper (120), einen Kastendeckel (110) und ein Bindeband zur Befestigung des Kastenkörpers (120) und des Kastendeckels (110) umfasst; der Kastendeckel (110) ein Steuermodul (111), ein Griffmodul (114), ein erstes Funktionsmodul (113) und ein zweites Funktionsmodul (112), die jeweils an zwei Seiten eines Griffs des Griffmoduls (114) angeordnet sind, eine erste Befestigungsschnalle und eine zweite Befestigungsschnalle umfasst, mindestens ein Feuchtigkeitssensor um den Kastenkörper (120) angeordnet ist, ein Beschleunigungssensor (115) weiter am Kastendeckel (110) angeordnet ist, und der Beschleunigungssensor (115) so ausgebildet ist, dass er eine Beschleunigung in vertikaler Abwärtsrichtung erhält; das Griffmodul (114) den Griff und eine Bodenabdeckplatte zur Abstützung des Griffs umfasst, wobei die Bodenabdeckplatte mit dem ersten Funktionsmodul (113) und dem zweiten Funktionsmodul (112) integriert ist; das erste Funktionsmodul (113) einen positiven Stromquellenanschluss umfasst, und das zweite Funktionsmodul (112) einen negativen Stromquellenanschluss umfasst, wobei eine elektrische Schleife, die aus dem positiven Stromquellenanschluss und dem negativen Stromquellenanschluss herausgeführt wird, so ausgebildet ist, dass sie das Steuermodul (111) mit Strom versorgt; das erste Funktionsmodul (113) oder das zweite Funktionsmodul (112) weiter mit einer schwimmfähigen Einrichtung zum Hineinfallen in Wasser (50) versehen ist, und die schwimmfähige Einrichtung zum Hineinfallen in Wasser (50) einen schwimmfähigen Airbag (540) in gefaltetem Zustand umfasst; und die zustandsüberwachungsbasierte Einrichtung zum Schutz vor dem Hineinfallen in Wasser (60) Folgendes umfasst:
eine Erkennungseinheit (601), die so ausgebildet ist, dass sie eine Beschleunigung des intelligenten Speicherbatteriekastens (10) und eine Feuchtigkeit einer Umgebung erkennt, in der sich der intelligente Speicherbatteriekasten (10) befindet;
eine Bestimmeinheit (602), die so ausgebildet ist, dass sie bestimmt, dass ein Raumbelegungszustand des intelligenten Speicherbatteriekastens (10) ein fallender Zustand eines Zustands zum Hineinfallen in Wasser ist, als Reaktion auf das Erkennen, dass die Beschleunigung größer ist als eine erste voreingestellte Beschleunigung und die Luftfeuchtigkeit kleiner ist als eine voreingestellte Luftfeuchtigkeit, wobei die voreingestellte Luftfeuchtigkeit zum Charakterisieren einer Luftfeuchtigkeit einer Umgebung verwendet wird, in der sich der intelligente Speicherbatteriekasten (10) derzeit in Wasser befindet, der Raumbelegungszustand einen Zustand zum Nicht-Hineinfallen in Wasser und den Zustand zum Hineinfallen in Wasser umfasst, und der Zustand zum Hineinfallen in Wasser den fallenden Zustand und einen Zustand zum Eindringen in Wasser umfasst; und bestimmt, dass der Raumbelegungszustand des intelligenten Speicherbatteriekastens (10) der Zustand zum Eindringen in Wasser des Zustands zum Hineinfallen in Wasser ist, als Reaktion auf das Erkennen, dass die Beschleunigung geringer ist als eine zweite voreingestellte Beschleunigung und die Luftfeuchtigkeit größer ist als die voreingestellte Luftfeuchtigkeit, wobei die erste voreingestellte Beschleunigung größer ist als die zweite voreingestellte Beschleunigung; und
eine Einheit zum Schutz vor dem Hineinfallen in Wasser (603), die so ausgebildet ist, dass sie als Reaktion darauf, dass der Raumbelegungszustand des intelligenten Speicherbatteriekastens (10) der fallende Zustand des Zustands zum Hineinfallen in Wasser ist, eine Startanweisung zum Schutz vor dem Hineinfallen in Wasser erzeugt und gemäß der Startanweisung zum Schutz vor dem Hineinfallen in Wasser die schwimmfähige Einrichtung zum Hineinfallen in Wasser (50) steuert, um den schwimmfähigen Airbag (540) im gefalteten Zustand innerhalb einer voreingestellten Zeit aufzublasen, wobei eine Auftriebskraft des schwimmfähigen Airbags (540) nach dem Aufblasen größer ist als eine Masse des intelligenten Speicherbatteriekastens (10) und der mobilen Stromquelle, und eine Dauer der voreingestellten Zeit kürzer ist als eine Intervalldauer von einem Zeitpunkt, an dem sich der intelligente Speicherbatteriekasten (10) im fallenden Zustand befindet, bis zu einem Zeitpunkt, an dem sich der intelligente Speicherbatteriekasten (10) im Zustand zum Eindringen in Wasser befindet; wobei
die Erkennungseinheit (601) so ausgebildet ist, dass sie einen Schalter eines Leistungsschalters abschaltet, der Leistungsschalter am ersten Funktionsmodul (113) oder am zweiten Funktionsmodul (112) angeordnet ist, und der Leistungsschalter so ausgebildet ist, dass er die Stromversorgung der mobilen Stromquelle steuert; und
die Erkennungseinheit (601) so ausgebildet ist, dass sie erkennt, ob der mindestens eine Ladeanschluss (32) mit einem Ladeanschluss an einem Ladekabel (34) einer anderen Leistungsvorrichtung (33) verbunden ist; als Reaktion darauf, dass der mindestens eine Ladeanschluss (32) mit dem Ladeanschluss am Ladekabel (34) der anderen Leistungsvorrichtung (33) verbunden ist, eine Position eines Ladeanschlusses des mindestens einen Ladeanschlusses (32) bestimmt, der mit dem Ladeanschluss am Ladekabel (34) der anderen Leistungsvorrichtung (33) verbunden ist; und einen Auswerfer (322) entsprechend der Lage des Ladeanschlusses des mindestens einen Ladeanschlusses (32) startet, der nur mit dem eingeführten Ende des Ladekabels (34) der anderen Leistungsvorrichtung (33) verbunden ist, um eine Feder in einem zusammengedrückten Zustand auszuwerfen, um das Ladekabel (34) der anderen Leistungsvorrichtung (33) in einem verbundenen Zustand durch eine Auswerferstange nach außen zu drücken, wobei der mindestens eine Ladeanschluss (32) am Kastendeckel (110) angeordnet ist, der mindestens eine Ladeanschluss (32) so ausgebildet ist, dass er eine mit dem mindestens einen Ladeanschluss (32) durch die mobile Stromquelle verbundene Vorrichtung mit Strom versorgt, der mindestens eine Ladeanschluss (32) den Auswerfer (322) umfasst, und der Auswerfer (322) die Feder und die mit der Feder verbundene Auswerferstange umfasst.

6. Intelligenter Speicherbatteriekasten (10) nach Anspruch 5 mit der zustandsüberwachungsbasierten Einrichtung zum Schutz vor dem Hineinfallen in Wasser (60) nach Anspruch 5, wobei der intelligente Speicherbatteriekasten (10) einen Prozessor (701), einen Speicher (702) und ein oder mehrere Programme umfasst, wobei das eine oder die mehreren Programme im Speicher (702) gespeichert sind und zum Ausführen durch den Prozessor (701) ausgebildet sind, und das eine oder die mehreren Programme Anweisungen zum Ausführen der Vorgänge im Verfahren nach einem der Ansprüche 1 bis 4 umfassen.

7. Computerlesbares Speichermedium, das so ausgebildet ist, dass es die zustandsüberwachungsbasierte Einrichtung zum Schutz vor dem Hineinfallen in Wasser nach Anspruch 5 dazu veranlasst, das Verfahren nach einem der Ansprüche 1 bis 4 durchzuführen.

## Revendications

1. Procédé de protection contre la chute dans l'eau basé sur la surveillance d'état, pour un boîtier de batterie de stockage intelligent (10), dans lequel un compartiment de batterie du boîtier de batterie de stockage intelligent (10) accueille une source d'alimentation mobile, et le boîtier de batterie de stockage intelligent (10) comporte un corps de boîtier (120), un couvercle de boîtier (110), et une bande de liaison permettant de fixer le corps de boîtier (120) et le couvercle de boîtier (110) ; le couvercle de boîtier (110) comporte un module de commande (111), un module de poignée (114), un premier module fonctionnel (113) et un deuxième module fonctionnel (112) respectivement disposés des deux côtés d'une poignée du module de poignée (114), une première boucle de fixation, et une deuxième boucle de fixation, au moins un capteur d'humidité est disposé autour du corps de boîtier (120), un capteur d'accélération (115) est en outre disposé au niveau du couvercle de boîtier (110), et le capteur d'accélération (115) est conçu pour obtenir une accélération dans une direction verticalement descendante ; le module de poignée (114) comporte la poignée et une plaque de couvercle de base permettant de supporter la poignée, dans lequel la plaque de couvercle de base est intégrée au premier module fonctionnel (113) et au deuxième module fonctionnel (112) ; et le premier module fonctionnel (113) comporte un port de source d'alimentation positive, et le deuxième module fonctionnel (112) comporte un port de source d'alimentation négative, dans lequel une boucle électrique menée depuis le port de source d'alimentation positive et le port de source d'alimentation négative est conçue pour alimenter le module de commande (111) ;
le premier module fonctionnel (113) ou le deuxième module fonctionnel (112) est en outre doté d'un appareil flottant anti-chute dans l'eau (50), et l'appareil flottant anti-chute dans l'eau (50) comporte un coussin de sécurité gonflable flottant (540) dans un état plié ; et le procédé comporte :
la détection (S210), par le module de commande (111), d'une accélération du boîtier de batterie de stockage intelligent (10) et d'une humidité d'un environnement dans lequel le boîtier de batterie de stockage intelligent (10) est situé ; en réponse à la détection que l'accélération est supérieure à une première accélération prédéfinie et que l'humidité est inférieure à une humidité prédéfinie, la détermination, par le module de commande (111), qu'un état d'occupation d'espace du boîtier de batterie de stockage intelligent (10) est un état de chute d'un état de chute dans l'eau, dans lequel l'humidité prédéfinie est utilisée pour caractériser une humidité d'un environnement dans lequel le boîtier de batterie de stockage intelligent (10) se trouve actuellement dans l'eau, l'état d'occupation d'espace comporte un état de non-chute dans l'eau et un état de chute dans l'eau, et l'état de chute dans l'eau comporte l'état de chute et un état d'entrée dans l'eau ; et en réponse à la détection que l'accélération est inférieure à une deuxième accélération prédéfinie et que l'humidité est supérieure à l'humidité prédéfinie, la détermination, par le module de commande (111), que l'état d'occupation d'espace du boîtier de batterie de stockage intelligent (10) est l'état d'entrée dans l'eau de l'état de chute dans l'eau, dans lequel la première accélération prédéfinie est supérieure à la deuxième accélération prédéfinie ;
en réponse à l'état d'occupation d'espace du boîtier de batterie de stockage intelligent (10) qui est l'état de chute de l'état de chute dans l'eau, la génération (S230), par le module de commande (111), d'une instruction de démarrage de protection contre la chute dans l'eau, et la commande, par le module de commande (111), selon l'instruction de démarrage de protection contre la chute dans l'eau, de l'appareil flottant anti-chute dans l'eau (50) pour gonfler le coussin de sécurité gonflable flottant (540) dans l'état plié dans un délai prédéfini, dans lequel une force de flottabilité du coussin de sécurité gonflable flottant (540) après le gonflage complet est supérieure à une masse du boîtier de batterie de stockage intelligent (10) et de la source d'alimentation mobile, et une durée du délai prédéfini est inférieure à une durée d'intervalle entre un moment où le boîtier de batterie de stockage intelligent (10) est dans l'état de chute et un moment où le boîtier de batterie de stockage intelligent (10) est dans l'état d'entrée dans l'eau ;
la coupure, par le module de commande (111), d'un interrupteur d'un disjoncteur, dans lequel le disjoncteur est disposé au niveau du premier module fonctionnel (113) ou du deuxième module fonctionnel (112), et le disjoncteur est configuré pour commander l'alimentation électrique de la source d'alimentation mobile ; et
la détection, par le module de commande (111), si au moins un port de charge (32) du couvercle de boîtier (110) est connecté à un port de charge sur un câble de charge (34) d'un autre dispositif d'alimentation (33) ; en réponse à la détection que l'au moins un port de charge (32) du couvercle de boîtier (110) est connecté au port de charge sur le câble de charge (34) de l'autre dispositif d'alimentation (33), la détermination, par le module de commande (111), d'une position d'un port de charge de l'au moins un port de charge (32) du couvercle de boîtier (110) connecté au port de charge sur le câble de charge (34) de l'autre dispositif d'alimentation (33) ; et le démarrage, par le module de commande (111), d'un éjecteur (322) correspondant à la position du port de charge de l'au moins un port de charge (32) du couvercle de boîtier (110) connecté uniquement à l'extrémité insérée du câble de charge (34) de l'autre dispositif d'alimentation (33), pour éjecter un ressort dans un état comprimé, pour pousser vers l'extérieur le câble de charge (34) de l'autre dispositif d'alimentation (33) dans un état connecté à travers une tige d'éjecteur, dans lequel l'au moins un port de charge (32) est disposé au niveau du couvercle de boîtier (110), l'au moins un port de charge (32) du couvercle de boîtier (110) est conçu pour alimenter un dispositif connecté à l'au moins un port de charge (32) du couvercle de boîtier (110) via la source d'alimentation mobile, l'au moins un port de charge (32) du couvercle de boîtier (110) comporte l'éjecteur (322), et l'éjecteur (322) comporte le ressort et la tige d'éjecteur connectée au ressort.

2. Procédé selon la revendication 1, dans lequel l'appareil flottant anti-chute dans l'eau (50) comporte en outre un générateur de gaz, le générateur de gaz comporte une chambre de génération de gaz (510), une chambre de stockage de gaz (530) et un plongeur (520), le plongeur (520) est situé entre la chambre de génération de gaz (510) et la chambre de stockage de gaz (530), le plongeur (520) est conçu pour isoler la chambre de génération de gaz (510) de la chambre de stockage de gaz (530), et une sortie de la chambre de stockage de gaz (530) est connectée à un orifice de gonflage du coussin de sécurité gonflable flottant (540) ; et la commande, par le module de commande (111), selon l'instruction de démarrage de protection contre la chute dans l'eau, de l'appareil flottant anti-chute dans l'eau (50) pour gonfler le coussin de sécurité gonflable flottant (540) dans l'état plié dans le délai prédéfini, comportant :
l'envoi, par le module de commande (111), d'une instruction de gonflage au générateur de gaz conformément à l'instruction de démarrage de protection contre la chute dans l'eau ; et
la commande, par le module de commande (111), de la chambre de génération de gaz (510) pour générer du gaz dans le délai prédéfini selon l'instruction de gonflage, dans lequel le plongeur (520) est poussé par le gaz généré pour se déplacer en direction de la sortie de la chambre de stockage de gaz (530), et le gaz stocké dans la chambre de stockage de gaz (530) est comprimé dans le coussin de sécurité gonflable flottant (540) dans l'état plié, pour faire en sorte que le coussin de sécurité gonflable flottant (540) soit déployé et éjecté dans le délai prédéfini.

3. Procédé selon la revendication 2, dans lequel, avant la commande, par le module de commande (111), selon l'instruction de démarrage de protection contre la chute dans l'eau, de l'appareil flottant anti-chute dans l'eau (50) pour gonfler le coussin de sécurité gonflable flottant (540) dans l'état plié, le procédé comporte en outre :
l'estimation, par le module de commande (111), d'un volume de gaz à gonfler en fonction de la masse du boîtier de batterie de stockage intelligent (10) et de la source d'alimentation mobile ; et
le réglage, par le module de commande (111), d'une position du plongeur (520) entre la chambre de génération de gaz (510) et la chambre de stockage de gaz (530) en fonction du volume de gaz à gonfler, afin que le volume de gaz stocké dans la chambre de stockage de gaz (530) soit égal au volume du gaz à gonfler.

4. Procédé selon la revendication 1, dans lequel le boîtier de batterie de stockage intelligent (10) est en connexion de communication avec un dispositif terminal utilisé par un utilisateur ; et après avoir déterminé, par le module de commande (111), que l'état d'occupation d'espace du boîtier de batterie de stockage intelligent (10) est dans l'état d'entrée d'eau de l'état de chute dans l'eau, le procédé comporte en outre :
l'envoi, par le module de commande (111), d'informations d'alerte de chute dans l'eau au dispositif terminal en réponse à l'état d'entrée dans l'eau du boîtier de batterie de stockage intelligent (10), dans lequel les informations d'alerte de chute dans l'eau indiquent un message d'alerte de chute dans l'eau, et le message d'alerte de chute dans l'eau sert à alerter l'utilisateur que le boîtier de batterie de stockage intelligent (10) est en train de tomber dans l'eau.

5. Appareil de protection contre la chute dans l'eau basé sur la surveillance d'état (60), pour un module de commande (111) dans un boîtier de batterie de stockage intelligent (10), dans lequel un compartiment de batterie du boîtier de batterie de stockage intelligent (10) accueille une source d'alimentation mobile, et le boîtier de batterie de stockage intelligent (10) comporte un corps de boîtier (120), un couvercle de boîtier (110), et une bande de liaison permettant de fixer le corps de boîtier (120) et le couvercle de boîtier (110) ; le couvercle de boîtier (110) comporte un module de commande (111), un module de poignée (114), un premier module fonctionnel (113) et un deuxième module fonctionnel (112) respectivement disposés des deux côtés d'une poignée du module de poignée (114), une première boucle de fixation, et une deuxième boucle de fixation, au moins un capteur d'humidité est disposé autour du corps de boîtier (120), un capteur d'accélération (115) est en outre disposé au niveau du couvercle de boîtier (110), et le capteur d'accélération (115) est conçu pour obtenir une accélération dans une direction verticalement descendante ; le module de poignée (114) comporte la poignée et une plaque de couvercle de base permettant de supporter la poignée, dans lequel la plaque de couvercle de base est intégrée au premier module fonctionnel (113) et au deuxième module fonctionnel (112) ; le premier module fonctionnel (113) comporte un port de source d'alimentation positive, et le deuxième module fonctionnel (112) comporte un port de source d'alimentation négative, dans lequel une boucle électrique menée depuis le port de source d'alimentation positive et le port de source d'alimentation négative est conçue pour alimenter le module de commande (111) ; le premier module fonctionnel (113) ou le deuxième module fonctionnel (112) est en outre doté d'un appareil flottant anti-chute dans l'eau (50), et l'appareil flottant anti-chute dans l'eau (50) comporte un coussin de sécurité gonflable flottant (540) dans un état plié ; et l'appareil de protection contre la chute dans l'eau basé sur la surveillance d'état (60) comporte :
une unité de détection (601), conçue pour détecter une accélération du boîtier de batterie de stockage intelligent (10) et une humidité de l'environnement dans lequel le boîtier de batterie de stockage intelligent (10) est situé ;
une unité de détermination (602), conçue pour déterminer qu'un état d'occupation d'espace du boîtier de batterie de stockage intelligent (10) est un état de chute d'un état de chute dans l'eau, en réponse à la détection que l'accélération est supérieure à une première accélération prédéfinie et que l'humidité est inférieure à une humidité prédéfinie, dans lequel l'humidité prédéfinie sert à caractériser une humidité d'un environnement dans lequel le boîtier de batterie de stockage intelligent (10) est actuellement situé dans l'eau, l'état d'occupation d'espace comporte un état de non-chute dans l'eau et un état de chute dans l'eau, et l'état de chute dans l'eau comporte l'état de chute et un état d'entrée dans l'eau ; et la détermination que l'état d'occupation d'espace du boîtier de batterie de stockage intelligent (10) est l'état d'entrée dans l'eau de l'état de chute dans l'eau, en réponse à la détection que l'accélération est inférieure à une deuxième accélération prédéfinie et que l'humidité est détectée comme étant supérieure à l'humidité prédéfinie, dans lequel la première accélération prédéfinie est supérieure à la deuxième accélération prédéfinie ; et
une unité de protection contre la chute dans l'eau (603), configurée pour, en réponse à l'état d'occupation d'espace du boîtier de batterie de stockage intelligent (10) qui est l'état de chute de l'état de chute dans l'eau, générer une instruction de démarrage de protection contre la chute dans l'eau, et commander, selon l'instruction de démarrage de protection contre la chute dans l'eau, l'appareil flottant anti-chute dans l'eau (50) pour gonfler le coussin de sécurité gonflable flottant (540) dans l'état plié dans un délai prédéfini, dans lequel une force de flottabilité du coussin de sécurité gonflable flottant (540) après gonflage complet est supérieure à une masse du boîtier de batterie de stockage intelligent (10) et de la source d'alimentation mobile, et une durée du délai prédéfini est inférieure à une durée d'intervalle entre le moment où le boîtier de batterie de stockage intelligent (10) est dans l'état de chute et le moment où le boîtier de batterie de stockage intelligent (10) est dans l'état d'entrée dans l'eau ; dans lequel
l'unité de détection (601) est conçue pour couper un interrupteur d'un disjoncteur, le disjoncteur étant disposé au niveau du premier module fonctionnel (113) ou du deuxième module fonctionnel (112), et le disjoncteur étant conçu pour commander l'alimentation électrique de la source d'alimentation mobile ; et
l'unité de détection (601) est conçue pour détecter si au moins un port de charge (32) est connecté à un port de charge sur un câble de charge (34) d'un autre dispositif d'alimentation (33) ; en réponse à la détection que l'au moins un port de charge (32) est connecté au port de charge sur le câble de charge (34) de l'autre dispositif d'alimentation (33), déterminer une position d'un port de charge de l'au moins un port de charge (32) connecté au port de charge sur le câble de charge (34) de l'autre dispositif d'alimentation (33) ; et démarrer un éjecteur (322) correspondant à l'emplacement du port de charge de l'au moins un port de charge (32) connecté uniquement à l'extrémité insérée du câble de charge (34) de l'autre dispositif d'alimentation (33), pour éjecter un ressort dans un état comprimé, afin de pousser vers l'extérieur le port de charge sur le câble de charge (34) de l'autre dispositif d'alimentation (33) dans un état connecté via une tige d'éjecteur, dans lequel l'au moins un port de charge (32) est disposé au niveau du couvercle de boîtier (110), l'au moins un port de charge (32) est configuré pour alimenter un dispositif connecté à l'au moins un port de charge (32) via la source d'alimentation mobile, l'au moins un port de charge (32) comporte l'éjecteur (322), et l'éjecteur (322) comporte le ressort et la tige d'éjecteur connectée au ressort.

6. Boîtier de batterie de stockage intelligent (10) selon la revendication 5 avec l'appareil de protection contre la chute dans l'eau basé sur la surveillance d'état (60) selon la revendication 5, le boîtier de batterie de stockage intelligent (10) comportant un processeur (701), une mémoire (702) et un ou plusieurs programmes, dans lequel le ou les programmes sont stockés dans la mémoire (702) et conçus pour être exécutés par le processeur (701), et le ou les programmes comportent des instructions permettant d'exécuter les opérations dans le procédé selon l'une quelconque des revendications 1 à 4.

7. Support de stockage lisible par ordinateur, conçu pour amener l'appareil de protection contre la chute dans l'eau basé sur la surveillance d'état selon la revendication 5 à mettre en œuvre le procédé selon l'une quelconque des revendications 1 à 4.
